# FASCICULE DE BREVET EUROPEEN

(11) **EP 1 106 298 B1**
(45) Date de publication et mention de la délivrance du brevet: **09.08.2006**
(21) Numéro de dépôt: 99123727.2
(22) Date de dépôt: 30.11.1999
(51) Int. Cl.: B23K 26/00

(54) **Procédé de soudage par rayon laser à énergie réduite et dispositif pour sa mise en oeuvre**
Verfahren und Vorrichtung zum Laserschweissen mit verringertem Energieverbrauch
Method and apparatus for laser welding with reduced energy consumption

(43) Date de publication de la demande: 13.06.2001
(73) Titulaire: APSwissTech S.A., 1462 Yvonand (CH)
(72) Inventeur: Buluschek, Bruno, 1026 Echandens (CH)
(74) Mandataire: Nithardt, Roland

(56) Documents cités:
- EP-A- 0 058 135
- EP-A- 0 934 796
- DE-A- 3 304 717
- DE-A- 3 400 891
- DE-A- 3 407 417
- US-A- 4 840 304

## Description

La présente invention concerne un procédé de soudage au défilé d'une bande mince en métal conformément au préambule de la revendication 1.

L'invention concerne également un dispositif de soudage conformément au préambule de la revendication 5.

Il est bien connu qu'en absence de tout traitement de surface, le coefficient d'absorption de l'énergie laser, c'est-à-dire l'énergie réellement utilisée pour amener un métal à son point de fusion est très faible, plus de 90 % de l'énergie étant dissipé par réflexion. Pour des métaux nobles, ce gaspillage d'énergie a peu d'influence sur le coût du produit final. Pour des métaux plus ordinaires tels que le cuivre et l'aluminium, destinés à être incorporés dans des produits de grande consommation, il est apparu depuis longtemps nécessaire de réduire cette perte par réflexion en effectuant, au moins localement, un traitement visant à rendre la surface moins réfléchissante.

Pour atteindre ce but, tant au niveau de la découpe que du soudage d'éléments plats la solution la plus naturelle, qui remonte certainement au moins aux années 1960, a consisté à appliquer sur la zone devant être traitée par faisceau laser un revêtement peu réfléchissant, tel qu'une suspension colloïdale de fines particules de graphite dans l'eau. En effet un brevet US 3,473,000 publié en 1969 critique déjà cette technique dans le cas d'une soudure de pièces métalliques planes bout à bout, en ce que ce revêtement peut intervenir dans la formation du cordon de soudure en diminuant sa résistance mécanique ou sa résistance à la corrosion. Cette technique reste toutefois encore largement utilisée dans le cas de soudures par recouvrement, par exemple les soudures de contacts dans les circuits intégrés comme décrit dans le document US 5,274,210. Pour remédier à l'inconvénient précité dans le cas de soudures bout à bout, le document US 3,473,000 propose de créer un corps noir en formant des rainures dans les bords à souder. Il est bien évident qu'un tel procédé, par l'usinage supplémentaire qu'il exige, n'est envisageable que sur des pièces à l'unité et/ou des pièces ayant une épaisseur suffisante, mais qu'il ne convient pas à une production de masse en continu.

Les techniques ultérieures se sont orientées à nouveau vers une modification de la surface. A ce titre, on peut citer le document US 4,023,005 publié en 1977, qui décrit un procédé consistant à revêtir, par des techniques connues de placage ou d'évaporation, la surface du métal à souder d'un mince revêtement d'un métal auxiliaire ayant des propriétés réfléchissantes inférieures et susceptible de former un alliage ayant de bonnes propriétés mécaniques. Du point de vue mécanique, on connaît bien les couples de métaux pouvant répondre, à des degrés divers, à la première exigence (voir par exemple la publication "Ease of welding various metals" - Iron Age April 1, 1965 - Chilton Company). Si on ajoute la deuxième exigence, le choix devient plus restreint, voire impossible. Pour le cuivre, le métal auxiliaire approprié peut être le nickel, mais pour l'aluminium, le magnésium qui conviendrait le mieux pour le critère mécanique, ne convient pas du tout en raison de son aspect argenté, donc fortement réfléchissant. En outre, les procédés de dépôt de ces métaux auxiliaires contribuent fortement à augmenter le coût du produit final, ce qui n'est pas souhaitable pour un produit de grande consommation.

Pour pallier l'inconvénient précité il a également été proposé de modifier l'aspect de surface de la zone proche du cordon de soudure par un traitement chimique approprié, par exemple en formant sur une surface de cuivre des oxydes, des chlorures ou des sulfates. Un tel procédé présente toutefois l'inconvénient de ne pas permettre une délimitation précise de la surface traitée, donc de laisser des traces sur les bords du cordon de soudure des empreintes d'attaque chimique très difficiles à éliminer pour conférer au produit un aspect sans défaut, et contribue également à augmenter le coût du procédé.

Dans cet art antérieur précité, on observera que le soudage par faisceau laser concerne toujours des éléments mis à plat.

Dans le cadre de la fabrication d'éléments tubulaires, la publication allemande DE 34 07 417 a pour objet la soudure au laser des bords respectifs opposés d'une bande de tôle métallique mince à base de fer ou d'aluminium en vue de la fabrication de récipients tubulaires, notamment de boîtes de conserves sans recouvrement des bords.

La publication allemande DE-A-33 04 717 concerne également un procédé de fabrication d'éléments tubulaires par soudure de deux bords de bandes métalliques minces par un faisceau laser dans lequel on applique sur la zone de jonction des deux bords une poudre du même matériau en vue d'accroître le pouvoir d'absorption de l'énergie du laser, cette poudre étant appliquée comme un vernis.

L'invention a donc pour but de remédier aux inconvénients connus de l'art antérieur précité en procurant un procédé et un dispositif de soudage par un faisceau laser de bandes métalliques minces pour former une enveloppe tubulaire fermée, en ayant préalablement appliqué sur les surfaces des bords en regard un revêtement faiblement réfléchissant qui permettra de réduire l'énergie utile, mais qui ne pénétrera pas dans le cordon de soudure.

A cet effet, l'invention a pour objet un procédé de soudage tel que défini en préambule et caractérisé en ce que l'on applique sur ladite ligne de jonction, avant d'effectuer ladite soudure au moyen dudit faisceau laser, un ruban d'un matériau liquide ou pâteux ayant un pouvoir d'absorption de l'énergie dudit faisceau laser supérieur à celui de ladite bande mince en métal, ce ruban d'un matériau liquide ou pâteux étant appliqué de manière à recouvrir ladite ligne de jonction, ledit matériau liquide ou pâteux étant appliqué soit au moyen d'une molette alimentée par gravité à partir d'un réservoir et appuyée sur ladite ligne de jonction, soit au moyen d'une buse de giclage alimentée sous pression à partir du réservoir, ledit matériau liquide ou pâteux étant émis par ladite buse de giclage sous la forme d'un jet disposé en incidence rasante par rapport à ladite ligne de jonction et perpendiculaire à cette dernière.

Ce procédé peut être mis en oeuvre en ayant une station de soudage fixe en dessous de laquelle on fait défiler la ligne de jonction. Ce dernier mode de réalisation est particulièrement bien adapté à la fabrication d'une enveloppe tubulaire métallique conformée par des moyens connus tels qu'un train de galets disposés deux par deux pour rapprocher les bords longitudinaux d'une même bande jusqu'à l'avant dernière paire de galets au niveau de laquelle est appliqué le matériau faiblement réfléchissant, le faisceau laser étant focalisé sur la ligne de jonction.

Par "station fixe" on entend une station qui ne se déplace pas au dessus de la ligne de jonction, mais dont la tête d'émission du faisceau laser peut avoir une certaine mobilité pour compenser les éventuelles irrégularités de défilement, comme prévu notamment dans le document EP 0 934 796 sur lequel est basé le préambule des revendications 1 et 5.

Dans la forme de réalisation préférée du procédé, l'on conforme ladite bande mince en métal en une enveloppe tubulaire au moyen d'un train de paires de galets disposés en regard deux par deux, l'on constitue ladite ligne de jonction et l'on applique ledit ruban de ledit matériau liquide ou pâteux au niveau de l'avant-dernière paire de galets et l'on effectue ladite soudure au laser au niveau de la dernière paire de galets.

De préférence, l'on effectue un nettoyage en aval de la station de soudure au laser.

Ledit matériau liquide ou pâteux ayant un pouvoir d'absorption de l'énergie dudit faisceau laser supérieur à celui de ladite bande mince en métal est avantageusement une composition comportant au moins un pigment de carbone micronisé et au moins un liant choisi parmi les hydrocarbures polysaturés ou aromatiques.

Le dispositif de soudage pour la mise en oeuvre de ce procédé et comportant des moyens pour incurver progressivement ladite bande mince en métal pour la conformer en une enveloppe tubulaire de section circulaire en rapprochant progressivement ses bords bout à bout en vue de former une ligne de jonction et des moyens de déplacement de ladite enveloppe tubulaire vers une station de soudage fixe à faisceau laser pour effectuer une soudure au moyen dudit faisceau laser des deux bords de la bande mince en métal le long de ladite ligne de jonction, les caractéristiques du faisceau laser étant ajustées pour réaliser la jonction entre les bords longitudinaux de ladite bande mince en métal, est caractérisé en ce qu'il comprend en outre des moyens pour appliquer sur ladite ligne de jonction, avant d'effectuer ladite soudure au moyen dudit faisceau laser, un ruban d'un matériau liquide ou pâteux ayant un pouvoir d'absorption de l'énergie dudit faisceau laser supérieur à celui de ladite bande mince en métal, ce ruban d'un matériau liquide ou pâteux étant appliqué de manière à recouvrir ladite ligne de jonction, et en ce que lesdits moyens d'application comportent un poste d'application équipé d'un réservoir et un organe applicateur, ledit organe applicateur étant soit une molette alimentée par gravité à partir du réservoir et appuyée sur ladite ligne de jonction, soit. une buse de giclage alimentée sous pression à partir dudit réservoir et orientée de telle manière que le jet formé soit en incidence rasante par rapport à ladite ligne de jonction et perpendiculaire à cette dernière.

L'utilisation d'une buse de giclage convient particulièrement bien à la réalisation d'enveloppes métalliques, car elle réduit encore le risque de pénétration du matériau faiblement réfléchissant entre les bords de la ligne de jonction.

De façon avantageuse, le dispositif comporte un train de paires de galets disposés en regard deux par deux et agencés pour conformer ladite bande mince en métal en une enveloppe tubulaire de section circulaire en rapprochant progressivement ses bords bout à bout en vue de former une ligne de jonction.

De préférence, le dispositif comporte également une station de nettoyage disposée en aval de ladite station de soudage fixe à faisceau laser.

On observera que, la ligne de jonction étant située sur une surface courbe, la quantité de matériau faiblement réfléchissant susceptible d'interférer avec la formation du cordon de soudure est réduite au minimum, quel que soit le mode d'application Le procédé et le dispositif selon l'invention permettent donc de réduire au maximum le risque d'entraîner le matériau faiblement réfléchissant dans le cordon de soudure et en conséquence améliorent la résistance mécanique et la résistance à la corrosion, tout en permettant de réduire la demande énergétique d'un facteur compris entre 2 et 10.

D'autres avantages et caractéristiques de l'invention apparaîtront à la lecture de la description détaillée qui suit, en référence aux dessins annexés dans lesquels:
- la figure 1 est une représentation schématique en perspective d'une station de soudage selon l'invention;
- la figure 2 est une représentation en coupe d'un premier mode d'application du matériau faiblement réfléchissant selon le plan de la ligne de jonction; et
- la figure 3 est une représentation schématique en perspective d'un deuxième mode d'application du matériau faiblement réfléchissant.

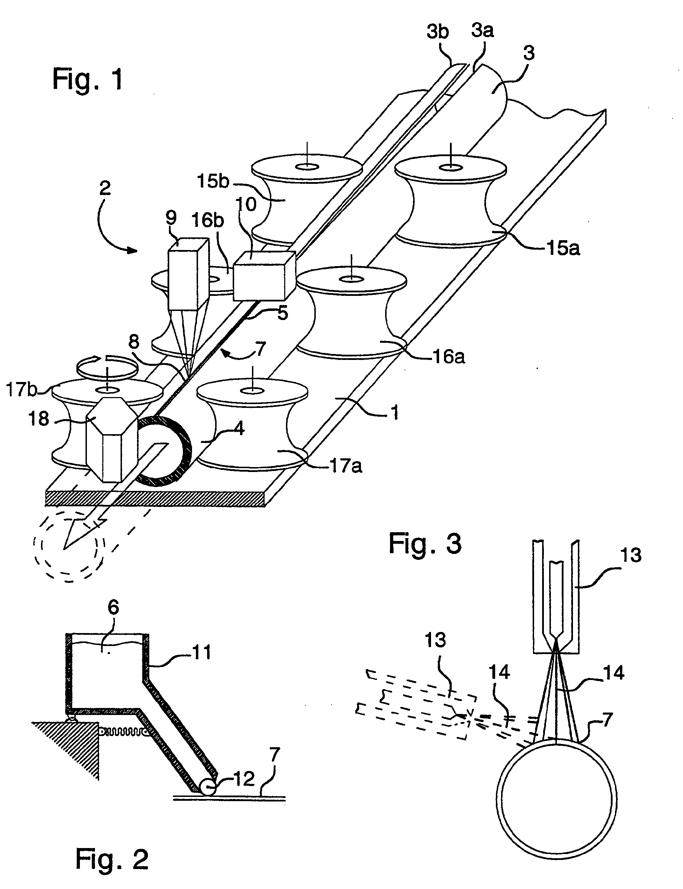

L'exemple de réalisation représenté schématiquement à la figure 1 concerne une station de soudage fixe 2 permettant de souder au défilé les deux bords 3a, 3b d'une même bande 3. Elle concerne plus particulièrement une installation dans laquelle une unique bande de métal 3 associée à un dispositif d'avancement, symbolisé par la flèche I est progressivement conformée par rapprochement de ses bords longitudinaux 3a, 3b destinés à être soudés pour former une enveloppe métallique mince 4. De telles enveloppes sont d'un usage très courant dans la fabrication de câbles ou de tuyaux pour en assurer le gainage ou l'armure, pour procurer un blindage électromagnétique ou électronique, pour permettre le transport d'un courant de court-circuit ou pour augmenter leur résistance aux agressions extérieures.

De façon connue l'installation comporte un train de galets disposés par paires, dont trois sont représentées 15a, 15b; 16a, 16b; 17a, 17b. Ces galets sont alignés sur un bâti 1. La station de soudage 2, solidaire dudit bâti 1 par des moyens non représentés, est disposée entre l'avant dernière paire de galets 16a, 16b et la dernière paire de galets 17a, 17b. La station de soudage 2 comprend, un poste 10 d'application d'un matériau faiblement réfléchissant 6 et un poste 9 d'émission d'un faisceau laser, ces deux postes 9, 10 étant alignés au-dessus d'une ligne de jonction 5 formée par le rapprochement des bords 3a, 3b.

Le poste 9 d'émission laser est de conception classique et ne sera pas décrit plus avant. A titre d'exemple, on peut citer, parmi les lasers les plus utilisés, le laser Nd:YAG émettant à λ = 1,06 µm et le laser C0₂ émettant à λ= 10,6 µm, pour lesquels on connaît bien les valeurs des coefficients d'absorption dans des surfaces en aluminium ou en cuivre non traitées, prises à titre d'exemple en référence à l'acier qui a un coefficient d'absorption élevé.

| | Coefficient d'absorption (% | |
|---|---|---|
| | λ = 1,06 µm | λ= 10,6 µm |
| Acier | 40 % | 12 % |
| Aluminium | 7% | 3 % |
| Cuivre | 3 % | 1 % |

Le poste 10 d'application du matériau faiblement réfléchissant, représenté schématiquement en coupe à la figure 2, est constitué par un réservoir 11 alimentant par gravité une molette 12, appliquée verticalement sur la ligne de jonction 5. On connaît déjà des compositions permettant d'obtenir un matériau faiblement réfléchissant aux longueurs d'onde précitées. Ces compositions comprennent un ou plusieurs pigments et un liant permettant notamment d'ajuster la viscosité et de permettre une adhésion suffisante à la surface traitée. Parmi les essais effectués dans le cadre de la présente invention, les compositions les plus appropriées comprennent comme pigment une poudre de carbone micronisé, et comme liant un ou plusieurs hydrocarbures polyinsaturés ou aromatiques, tels que le benzol. Dans ce mode d'application du matériau faiblement réfléchissant 6, on choisira une composition permettant d'avoir une viscosité un peu inférieure à celle d'une pâte épaisse.

Dans le mode de réalisation représenté schématiquement à la figure 3, le poste 10 d'application du matériau faiblement réfléchissant 6 diffère de celui précédemment décrit en ce qu'il comprend, une buse de giclage 13 alimentée sous pression à partir du réservoir 11 orientée pour diriger un jet 14 sur la ligne de jonction 5. En orientant ce jet 14 en incidence rasante et perpendiculairement à celle-ci, on peut former un ruban 7 de matériau faiblement réfléchissant 6 qui mouille encore moins la ligne de jonction 5, ce qui contribue encore à améliorer les propriétés souhaitées pour le cordon de soudure 8. Dans ce cas, les pigments et les liants peuvent être les mêmes que ceux indiqués dans le premier mode de réalisation, mais leurs proportions devront être modifiées pour avoir une viscosité inférieure.

Outre le poste 10 d'application du matériau faiblement réfléchissant 6 et le poste d'émission du faisceau laser 9, la station de soudage 10 peut en outre comporter un poste de nettoyage 18, situé en aval du poste 9 pour permettre l'élimination des éventuels résidus du matériau faiblement réfléchissant 6, par exemple par lavage au jet d'eau, brossage ou ponçage au moyen d'une bande abrasive.

Il est bien évident que l'invention qui vient d'être décrite peut être intégrée dans d'autres procédés de conformation d'enveloppes métalliques, par exemple dans le procédé décrit dans le document EP 0 934796 permettant de contrôler la qualité de la soudure effectuée.

L'homme de métier est également, sans sortir du cadre de la présente invention, en mesure d'adapter le procédé selon l'invention et sa mise en oeuvre à d'autres types d'installations ayant comme atténuateur de la consommation énergétique le procédé d'application d'un revêtement faiblement réfléchissant qui vient d'être décrit.

## Revendications

1. Procédé de soudage au défilé d'une bande mince (3) en métal par une station de soudage fixe (2) à faisceau laser pour former une enveloppe tubulaire fermée (4), ce procédé comportant une étape au cours de laquelle on incurve progressivement ladite bande mince en métal (3) pour la conformer en une enveloppe tubulaire de section circulaire en rapprochant progressivement ses bords (3a, 3b) bout à bout pour former une ligne de jonction (5), et une étape au cours de laquelle on effectue une soudure au moyen dudit faisceau laser des deux bords de la bande mince en métal (3) le long de ladite ligne de jonction (5), **caractérisé en ce que** l'on applique sur ladite ligne de jonction, avant d'effectuer ladite soudure au moyen dudit faisceau laser, un ruban d'un matériau liquide ou pâteux (6) ayant un pouvoir d'absorption de l'énergie dudit faisceau laser supérieur à celui de ladite bande mince (3) en métal, ce ruban d'un matériau liquide ou pâteux (6) étant appliqué de manière à recouvrir ladite ligne de jonction (5), ledit matériau liquide ou pâteux (6) étant appliqué soit au moyen d'une molette (12) alimentée par gravité à partir d'un réservoir (11) et appuyée sur ladite ligne de jonction (5), soit au moyen d'une buse de giclage (13) alimentée sous pression à partir du réservoir (11), ledit matériau liquide ou pâteux (6) étant émis par ladite buse de giclage (13) sous la forme d'un jet disposé en incidence rasante par rapport à ladite ligne de jonction (5) et perpendiculaire à cette dernière.

2. Procédé selon la revendication 1, **caractérisé en ce que** l'on conforme ladite bande mince (3) en métal en une enveloppe tubulaire (4) au moyen d'un train de paires de galets (15a, 15b; 16a, 16b; 17a, 17b) disposés en regard deux par deux, **en ce que** l'on constitue ladite ligne de jonction et l'on applique ledit ruban de ledit matériau liquide ou pâteux (6) au niveau de l'avant-dernière paire de galets (16a, 16b) et **en ce que** l'on effectue ladite soudure au laser au niveau de la dernière paire de galets (17a, 17b).

3. Procédé selon la revendication 1, **caractérisé en ce que** l'on effectue un nettoyage en aval de la station de soudure au laser (2).

4. Procédé selon la revendication 1, **caractérisé en ce que** ledit matériau liquide ou pâteux (6) ayant un pouvoir d'absorption de l'énergie dudit faisceau laser supérieur à celui de ladite bande mince (3) en métal est une composition comportant au moins un pigment de carbone micronisé et au moins un liant choisi parmi les hydrocarbures polysaturés ou aromatiques.

5. Dispositif de soudage au défilé d'une bande mince (3) en métal pour former une enveloppe tubulaire fermée (4), ce dispositif comportant des moyens pour incurver progressivement ladite bande mince en métal (3) pour la conformer en une enveloppe tubulaire de section circulaire en rapprochant progressivement ses bords (3a, 3b) bout à bout en vue de former une ligne de jonction (5) et des moyens de déplacement de ladite enveloppe tubulaire vers une station de soudage fixe (2) à faisceau laser pour effectuer une soudure au moyen dudit faisceau laser des deux bords de la bande mince en métal (3) le long de ladite ligne de jonction (5), les caractéristiques du faisceau laser étant ajustées pour réaliser la jonction entre les bords longitudinaux de ladite bande mince en métal, **caractérisé en ce qu'**il comprend en outre des moyens pour appliquer sur ladite ligne de jonction, avant d'effectuer ladite soudure au moyen dudit faisceau laser, un ruban d'un matériau liquide ou pâteux (6) ayant un pouvoir d'absorption de l'énergie dudit faisceau laser supérieur à celui de ladite bande mince (3) en métal, ce ruban d'un matériau liquide ou pâteux (6) étant appliqué de manière à recouvrir ladite ligne de jonction (5), et **en ce que** lesdits moyens d'application comportent un poste d'application (10) équipé d'un réservoir (11) et un organe applicateur, ledit organe applicateur étant soit une molette (12) alimentée par gravité à partir du réservoir (11) et appuyée sur ladite ligne de jonction (5), soit une buse de giclage (13) alimentée sous pression à partir dudit réservoir (11) et orientée de telle manière que le jet formé (14) soit en incidence rasante par rapport à ladite ligne de jonction (5) et perpendiculaire à cette dernière.

6. Dispositif selon la revendication 5, **caractérisé en ce que** les moyens pour conformer ladite bande mince (3) en métal en une enveloppe tubulaire de section circulaire en rapprochant progressivement ses bords (3a, 3b) bout à bout en vue de former la ligne de jonction (5) comportent un train de paires de galets (15a, 15b; 16a, 16b; 17a, 17b) disposés en regard deux par deux.

7. Dispositif selon la revendication 5, **caractérisé en ce qu'**il comporte une station de nettoyage (18) disposée en aval de ladite station de soudage fixe (2) à faisceau laser.

## Claims

1. Process of welding along the length of a thin metal strip (3) by a fixed laser-beam welding station (2) to form a closed tubular sheath (4), this process incorporating a stage during which the said thin metal strip (3) is progressively bent in order to shape it into a tubular sheath with a circular cross section by bringing its edges (3a, 3b) progressively together, end to end, in order to form a seam (5), and a stage during which the said laser beam is used to weld the two edges of the thin metal strip (3) along the said seam (5), **characterised in that**, before the welding process is carried out using the said laser beam, a ribbon of a liquid or paste-like material (6) with a power to absorb the energy of the said laser beam greater than that of the said thin metal strip (3) is applied to the seam, this ribbon of a liquid or paste-like material (6) being applied so as to cover the said seam (5), the said liquid or paste-like material (6) being applied either by means of a wheel (12) fed by gravity from a reservoir (11) and supported on the said seam (5) or by means of a spray nozzle (13) fed under pressure from the reservoir (11), the said liquid or paste-like material (6) being emitted by the said spray nozzle (13) in the form of a jet that has an oblique incidence with regard to the said seam (5) and is perpendicular to it.

2. A process according to claim 1, **characterised in that** the said thin metal strip (3) is shaped into, a tubular sheath (4) by means of a series of pairs of rollers (15a, 15b; 16a, 16b; 17a, 17b) arranged in opposing pairs, **in that** the said seam is formed and the said ribbon of liquid or paste-like material (6) is applied level with the penultimate pair of rollers (16a, 16b) and **in that** the said laser welding process is carried out level with the last pair of rollers (17a, 17b).

3. A process according to claim 1, **characterised in that** a cleaning process is carried out downstream of the laser welding station (2).

4. A process according to claim 1, **characterised in that** the said liquid or paste-like material (6) with a power to absorb the energy of the said laser beam greater than that of the said thin metal strip (3) is a compound containing at least one micronized carbon pigment and at least one binding agent chosen from among the polysaturated or aromatic hydrocarbons.

5. A device for welding along the length of a thin metal strip (3) to form a closed tubular sheath (4), this device containing the means to bend the said thin metal strip (3) progressively in order to shape it into a tubular sheath with a circular cross section by bringing its edges (3a, 3b) progressively together, end to end, in order to form a seam (5), and the means to move the said tubular sheath towards a fixed laser beam welding station (2) in order to carry out a welding process using the said laser beam on the two edges of the thin metal strip (3) along the said seam (5), the characteristics of the laser beam being adjusted in order to achieve a join between the longitudinal edges of the said thin metal strip, **characterised in that** it also incorporates the means to apply to the said seam, before the welding process takes place using the said laser beam, a ribbon of liquid or paste-like material (6) with a power to absorb the energy of the said laser beam greater than that of the said thin metal strip (3), this ribbon of liquid or paste-like material (6) being applied in such a way as to cover the said seam (5), and **in that** the said means of application incorporates an application unit (10) equipped with a reservoir (11) and an applicator mechanism, the said applicator mechanism being either a wheel (12) fed by gravity from the reservoir (11) and supported on the said seam (5) or a spray nozzle (13) fed under pressure from the said reservoir (11) and aimed in such a way that the jet (14) thus formed has an oblique incidence with regard to the said seam (5) and is perpendicular to it.

6. A device according to claim 5, **characterised in that** the means of shaping the said thin metal strip (3) into a tubular sheath with a circular cross section by bringing its edges (3a, 3b) progressively together, end to end, in order to form the seam (5) incorporates a series of pairs of rollers (15a, 15b; 16a, 16b; 17a, 17b) arranged in opposing pairs.

7. A device according to claim 5, **characterised in that** it incorporates a cleaning station (18) deployed downstream of the said fixed laser beam welding station (2).

## Patentansprüche

1. Schweißverfahren beim Vorbeibewegen eines dünnen Metallbandes (3) an einer festen Laserstrahlschweißstation (2), um eine geschlossene rohrförmige Umhüllung (4) auszubilden, wobei das Verfahren einen Schritt umfasst, bei dem das dünne Metallband (3) fortschreitend gekrümmt wird, um es an eine rohrförmige Umhüllung mit kreisförmigem Querschnitt anzupassen, indem seine Ränder (3a,3b) fortschreitend aneinander angenähert werden, um eine Verbindungslinie (5) herzustellen, und einen Schritt, bei dem mittels des Laserstrahles ein Verschweißen der zwei Ränder des dünnen Metallbandes (3) entlang der Verbindungslinie (5) durchgeführt wird,
**dadurch gekennzeichnet , dass**
auf der Verbindungslinie vor der Ausführung des Schweißens mittels des Laserstrahles ein Streifen aus einem flüssigen oder pastösen Werkstoff (6) aufgetragen wird, der eine Absorptionsfähigkeit für die Energie des Laserstrahles aufweist, die höher als diejenige des dünnen Metallbandes (3) ist, wobei der Streifen aus einem flüssigen oder pastösen Werkstoff (6) so aufgetragen wird, dass er die Verbindungslinie (5) abdeckt, wobei der flüssige oder pastöse Werkstoff (6) entweder mittels einer Walze (12), die mittels Schwerkraft von einem Tank (11) beschickt und auf der Verbindungslinie (5) abgestützt wird, oder mittels einer Spritzdüse (13) aufgetragen wird, die unter Druck von dem Tank (11) beschickt wird, wobei der flüssige oder pastöse Werkstoff (6) mittels der Spritzdüse (13) in Form eines im Verhältnis zu der Verbindungslinie (5) streifend auftreffenden Strahles und senkrecht zu der Letzteren ausgegeben wird.

2. Verfahren nach Anspruch 1,
**dadurch gekennzeichnet, dass**
das dünne Metallband (3) einer rohrförmigen Hülle (4) mittels eines Zuges aus Paaren von Rollen (15a,15b;16a,16b;17a,17b) angepasst wird, die zu zweit einander gegenüberliegend angeordnet sind, dass die Verbindungslinie ausgebildet wird, und
dass der Streifen aus dem flüssigen oder pastösen Werkstoff (6) auf der Höhe des vorletzten Paares von Rollen (16a,16b) aufgetragen wird, und dass das Laserschweißen auf der Höhe des letzten Paares von Rollen (17a,17b) durchgeführt wird.

3. Verfahren nach Anspruch 1,
**dadurch gekennzeichnet, dass** eine Reinigung stromabwärts der Laserschweißstation (2) ausgeführt wird.

4. Verfahren nach Anspruch 1,
**dadurch gekennzeichnet, dass**
der flüssige oder pastöse Werkstoff (6), der eine Absorptionsfähigkeit für die Energie des Laserstrahles aufweist, die höher als diejenige des dünnen Metallbandes (3) ist, eine Zusammensetzung ist, die mindestens ein mikronisiertes Kohlenstoffpigment und mindestens ein Bindemittel aufweist, welches aus den mehrfach gesättigten oder aromatischen Kohlenwasserstoffen ausgewählt ist.

5. Schweißvorrichtung zum Schweißen eines sich an einer festen Laserstrahlschweißstation (2) vorbeibewegenden dünnen Metallbandes (3), um eine geschlossene rohrförmige Umhüllung (4) auszubilden, wobei die Vorrichtung Einrichtungen umfasst, um das dünne Metallband (3) fortschreitend zu krümmen, um es an eine rohrförmige Umhüllung mit kreisförmigem Querschnitt anzupassen, indem seine Ränder (3a,3b) fortschreitend aneinander angenähert werden, um eine Verbindungslinie (5) herzustellen, und Einrichtungen zur Verlagerung der rohrförmigen Umhüllung zu einer festen Laserstrahlschweißstation (2), um ein Verschweißen der zwei Ränder des dünnen Metallbandes (3) entlang der Verbindungslinie (5) zu bewirken, wobei die Merkmale des Laserstrahles so eingestellt werden, dass die Verbindung zwischen den Längsrändern des dünnen Metallbandes ausgeführt wird,
**dadurch gekennzeichnet, dass**
sie außerdem Einrichtungen umfasst, um auf der Verbindungslinie vor der Ausführung des Schweißens mittels des Laserstrahles einen Streifen aus einem flüssigen oder pastösen Werkstoff (6) aufzutragen, der eine Absorptionsfähigkeit für die Energie des Laserstrahles aufweist, die höher als diejenige des dünnen Metallbandes (3) ist, wobei der Streifen aus einem flüssigen oder pastösen Werkstoff (6) so aufgetragen wird, dass er die Verbindungslinie (5) abdeckt, wobei die Auftragseinrichtungen eine mit einem Tank (11) und einem Auftragselement ausgestattete Auftragsstation (10) aufweisen, wobei das Auftragsorgan entweder eine Walze (12), die mittels Schwerkraft von dem Tank (11) beschickt und auf der Verbindungslinie (5) abgestützt wird, oder eine Spritzdüse (13) ist, die unter Druck von dem Tank (11) beschickt wird und die so ausgerichtet ist, dass der ausgebildete Strahl (14) im Verhältnis zu der Verbindungslinie (5) streifend und senkrecht zu der Letzteren auftrifft.

6. Vorrichtung nach Anspruch 5,
**dadurch gekennzeichnet, dass** die Einrichtungen zum Anpassen des dünnen Metallbandes (3) an eine rohrförmige Umhüllung mit kreisförmigem Querschnitt durch fortschreitende Annäherung seiner Ränder (3a,3b) aneinander, um die Verbindungslinie (5) auszubilden, einen Zug aus Paaren von Rollen (15a,15b;16a,16b;17a,17b) umfassen, die zu zweit einander gegenüberliegend angeordnet sind.

7. Vorrichtung nach Anspruch 5,
**dadurch gekennzeichnet, dass**
sie eine stromabwärts der festen
Laserstrahlschweißstation (2) angeordnete Reinigungsstation (18) umfasst.
